# EUROPEAN PATENT APPLICATION

(11) **EP 3 413 669 A1**
(43) Date of publication of application: **12.12.2018**
(21) Application number: 17747497.0
(22) Date of filing: 02.02.2017
(51) Int. Cl.: H04W 72/12, H04W 16/14, H04W 72/04, H04W 72/08

(54) **USER TERMINAL, WIRELESS BASE STATION, AND WIRELESS COMMUNICATION METHOD**

(30) Priority: 04.02.2016 JP 2016020302
(71) Applicant: NTT DOCOMO, INC., Chiyoda-ku Tokyo 100-6150 (JP)
(72) Inventor: HARADA, Hiroki, Tokyo 100-6150 (JP); NAGATA, Satoshi, Tokyo 100-6150 (JP); WANG, Lihui, Beijing 100190 (CN); LIU, Liu, Beijing 100190 (CN); JIANG, Huiling, Beijing 100190 (CN)
(74) Representative: Hoffmann Eitle
(86) International application number: PCT/JP2017/003705
(87) International publication number: WO 2017/135346

(57) **Abstract**

To realize appropriate PHR and/or BSR transmitting operation even if communicating using a carrier to which LBT is set. According to one embodiment of the present invention, a user terminal carrying out communication using a first carrier not requiring LBT and a second carrier requiring LBT, includes a receiving section that receives one or more downlink control data for scheduling uplink data transmission on the first carrier in a predetermined subframe and uplink data transmission on the second carrier in the predetermined subframe, a measurement section that carries out the listening by the second carrier before the uplink data transmission on the second carrier in the predetermined subframe, to acquire a listening result, a generation section that generates a first MAC element and a second MAC element and a control section that executes control to transmit the first MAC element or the second MAC element on at least one of the first carrier and the second carrier in the predetermined subframe based on the listening result.

## Description

### [Technical field]

The present invention relates to a user terminal, a radio base station and a radio communication method of the next-generation mobile communication system.

### [Background art]

In the universal mobile telecommunications system (UMTS) network, the long term evolution (LTE) has been selected as a specification for the purpose of achieving a higher data rate, lower delay, etc. (Non-patent Literature 1). Further, for the purpose of broadening the band and enhancing the speed further from those of LTE (also called LTE Rel.8 or 9), LTE advanced (also called LTE-A, or LTE Rel.10, 11, or 12) has been selected as specifications, and also succeeding systems of LTE (also called, for example, Future Radio Access (FRA), 5th generation mobile communication system (5G), and LTE Rel.13 or later) have been discussed.

The specification of LTE of Rel.8-12 has been made on the assumption that it is exclusively used in a frequency band (also called a licensed band)) licensed to communications carriers (operators). Examples of the licensed bands are 800 MHz, 1.7 GHz, and 2 GHz.

The wide spreading of high-performance user equipments (UEs) such as smart phones and tablet computers in recent years is rapidly increasing the user traffic. In order to absorb the increasing user traffic, there is a demand of adding further frequency bands, but there is a limitation in the spectrum of licensed bands (licensed spectrum).

Under these circumstances, it is discussed in Rel.13 LTE to utilize bands of an unlicensed spectrum, which are usable other than the licensed bands, to expand the frequency of the LTE system (non-patent literature 2). As the unlicensed bands, bands of 2.4GHz, 5GHz and the like, which can use, for example, Wi-Fi (registered trademark) and Bluetooth (registered trademark), are considered.

Specifically, in Rel.13 LTE, carrier aggregation (CA) between a licensed band and an unlicensed band is considered. Such communication using an unlicensed band together with a licensed band is called License-Assisted Access (LAA). Note that, in the future, dual connectivity (DC) of a licensed band and an unlicensed band and stand-alone (SA) of an unlicensed band may also be subjected to the discussion target of LAA.

For unlicensed bands to which LAA is applied, introduction of an interference control facility is considered so as to coexist with LTE of other operators, Wi-Fi and other systems. Wi-Fi adopts Listen Before Talk (LBT) based on Clear Channel Assessment (CCA) as an interference control facility within the same frequency band. LBT is a technique which performs listening (sensing) before transmission of a signal and controls the transmission based on the result of the listening. For example, in Japan, Europe, etc., it is required in the regulation that the LBT function is essential to the systems such as Wi-Fi and the like, which are used in an unlicensed band of 5GHz.

### [Citation List]

### [Non-patent literature]

[Non-patent literature 1] 3GPP TS 36.300 "Evolved Universal Terrestrial Radio Access (E-UTRA) and Evolved Universal Terrestrial Radio Access Network (E-UTRAN) ; Overall description; Stage 2"
[Non-patent literature 2] AT & T, "Drivers and Benefits and Challenges for LTE in Unlicensed Spectrum" 3GPP TSG RAN Meeting #62 RP-131701

### [Summary of the Invention]

### [Technical Problem]

In the existing LTE/LTE-A system, UE transmits to a device (for example, eNB) on the network side, a buffer status report (BSR) which indicates the amount of buffer (buffer size) of uplink data to be transmitted and a power headroom report (PHR) which reports the power headroom of the UE.

However, when transmitting PHR/BSR by an unlicensed band for which the uplink LBT needs to be carried out, using the method of calculation and generation of PHR/BSR in the existing LTE, the PHR/BSR reported may not be able to reflect in itself the actual power headroom/buffer size. If eNB performs scheduling and/or power control using PHR/BSR not reflecting on the actual status, communication delay, degradation of frequency utilization efficiency and the like are likely to occur, disabling appropriate communications.

The present invention has been achieved in view of the above-discussed point and an object thereof is to provide a user terminal, a radio base station and a radio communication method, which can realize appropriate PHR and/or BSR transmission operations even if a carrier to which LBT is set is used for communications.

### [Solution to Problem]

According one embodiment of the present invention, a user terminal carrying out communication using a first carrier for which listening is unnecessary before uplink transmission and a second carrier for which listening is necessary before uplink transmission, comprises: a receiving section that receives one or more downlink control data for scheduling uplink data transmission on the first carrier in a predetermined subframe and uplink data transmission on the second carrier in the predetermined subframe; a measurement section that carries out the listening by the second carrier before the uplink data transmission on the second carrier in the predetermined subframe, to acquire a listening result; a generation section that generates a first Medium Access Control (MAC) element and a second MAC element; and a control section that executes control to transmit the first MAC element or the second MAC element on at least one of the first carrier and the second carrier in the predetermined subframe based on the listening result.

### [Advantageous Effects of Invention]

According to the present invention, it is possible to realize appropriate PHR and/or BSR transmission operations even if a carrier to which LBT is set is used for communication.

### [Brief Description of the Drawings]

[FIG. 1] FIGS. 1A to 1C are diagrams showing an example of the scenario in which unlicensed CCs are set to UE and PUSCH is scheduled to at least one CC.
[FIG. 2] FIGS. 2A to 2C are diagrams illustrating a problem which may occur when PUSCH transmission is scheduled to both licensed CC and unlicensed CC at the same time.
[FIG. 3] FIGS. 3A and 3B are diagrams showing an example of PHR/BSR MAC CE transmission control in the first embodiment.
[FIG. 4] FIGS. 4A and 4B are diagrams showing an example of PHR/BSR MAC CE transmission control in the second embodiment.
[FIG. 5] FIGS. 5A and 5B are diagrams showing an example of PHR/BSR MAC CE transmission control in the third embodiment.
[FIG. 6] FIG. 6 is a diagram showing an example of the brief structure of a radio communications system according to an embodiment of the present invention.
[FIG. 7] FIG. 7 is a diagram showing an example of the entire configuration of a radio base station according to an embodiment of the present invention.
[FIG. 8] FIG. 8 is a diagram showing an example of the functional configuration of the radio base station according to an embodiment of the present invention.
[FIG. 9] FIG. 9 is a diagram showing an example of the entire configuration of a user terminal according to an embodiment of the present invention.
[FIG. 10] FIG. 10 is a diagram showing an example of the functional configuration of the user terminal according to an embodiment of the present invention.
[FIG. 11] FIG. 11 is a diagram showing an example of a hardware configuration of the user terminal and radio base station according to an embodiment of the present invention.

### [Description of Embodiments]

In the system using LTE/LTE-A by an unlicensed band (that is, for example, LAA system), it is considered to require an interference control facility to coexist with LTE and Wi-Fi of other operators, or other systems. Note that the system which uses LTE/LTE-A by an unlicensed band may be collectively called LAA, LAA-LTE, LTE-U, U-LTE or the like regardless of its application mode of CA, DC or SA.

Generally, in the case of a transmission point (for example, a radio base station (eNB) or a user equipment (UE)) which uses a carrier (, which may be called carrier frequency or simply, frequency) of an unlicensed band for the communications, if some other entity (for example, other UE) which is using the carrier of the unlicensed band for communication is detected, the transmission on the carrier is forbidden.

Therefore, the transmission point executes listening (LBT) at a timing a predetermined time before the transmission timing. More specifically, the transmission point which executes LBT searches an entire target carrier band (for example, one component carrier (CC)) and confirms whether other devices (for example, radio base stations, UE, Wi-Fi devices, etc.) are communicating in the carrier band, at a timing a predetermined time before the transmission timing (that is, for example, the immediately previous subframe).

In this specification, the term "listening" refers to the operation which detects/measures whether a signal exceeding a predetermined level (for example, predetermined power) is transmitted from other transmission points before one transmission point (for example, eNB or UE) transmits a signal. Moreover, the listening executed by eNB and/or UE may be called LBT, CCA, carrier sensing, or the like.

Moreover, LBT executed before transmission of downlink by eNB, for example, may be called DL LBT, or LBT executed before transmission of uplink by UE, for example, may be called UL LBT. UE may be notified of data regarding the carrier to execute UL LBT, and may judge the carrier based on the data and execute UL LBT.

The transmission point carries out transmission using the carrier when it is confirmed that any other device is not communicating. For example, when the received power (receiving signal power in the LBT period) measured by LBT is equal to or less than a predetermined threshold, the transmission point judges that the channel is an idle state (LBTidle) and carry out the transmission. The expression "channel is an idle state" may be rephrased that the channel is not occupied by a specific system, and it may be expressed that the channel is, for example, idle, clear or free.

On the other hand, the transmission point stops its transmission process when some other device is detected to be using even only part of the target carrier bands. For example, when it is detected that the received power of the signal from other device in the band exceeds the predetermined threshold, the transmission point judges that the channel is in a busy state (LBT_{busy}) and does not carry out the transmission. Once detected as LBT_{busy}, the channel will be available again only after executing LBT again to confirm that it is in an idle state. Note that the method of judging the idle state/busy state of the channel by LBT is not limited to this.

As a mechanism (scheme) of LBT, frame-based equipment (FBE) and load-based equipment (LBE) are discussed. These equipments differ in frame configuration, channel occupying time, etc. in transmission and reception. FBE has a fixed timing in the configuration of transmission and reception of LBT. LBE has an LBT transmission-and-reception configuration which is not fixed along the time-axis and carries out LBT according to demand.

More specifically, FBE operates by the following mechanism. That is, it has a fixed frame period and executes carrier sensing by a predetermined frame for a certain period of time (, which may be called, for example, LBT duration) . If as a result of the sensing, the channel is judged to be available, the FBE carries out transmission. But if the channel is not available, the FBE stands by without transmitting until the carrier sensing timing in the subsequent frame.

On the other hand, LBE operates by the following mechanism. That is, it executes carrier sensing (initial CCA) and if judges the channel to be not available, it extends the carrier sensing time to carry out an extended CCA (ECCA) procedure in which carrier sensing is executed continuously until the channel is available. LBE requires random back-off to appropriately avoid collision.

The carrier sensing time (, which may be called carrier sensing period) is the time period (for example, one symbol length) to judge the availability of a channel by processing listening or the like in order to obtain a result in LBT.

The transmission point can transmit a predetermined signal (for example, channel reservation signal) according to a LBT result. Here, the LBT result means data (for example, LBT_{idle} or LBT_{busy}) regarding the vacancy state of a channel obtained by LBT in a carrier to which LBT is set.

Moreover, if transmission is started when a LBT result is an idle state (LBT_{idle}), the transmission point can transmit while omitting LBT for a predetermined period (for example, 10 to 13 ms). Such transmission is called, for example, burst transmission, burst, or transmission burst.

As stated above, in the LAA system, the interference between LAA and Wi-Fi, interference between LAA systems, etc. can be avoided by introducing the interference control within the same frequency based on the LBT mechanism to a transmission point. Moreover, even if transmission points are controlled independently for each operator using the LAA system, the interference can be reduced without grasping the contents of control by LBT.

In the existing LTE/LTE-A system, UE transmits to a device (for example, eNB) on the network side a buffer status report (BSR) which indicates the amount of buffer (buffer size) of the uplink data to be transmitted and Power Headroom Report (PHR) which reports the power headroom of the UE.

BSR and PHR are transmitted by Medium Access Control (MAC) signaling using the uplink shared channel (Physical Uplink Shared Channel: PUSCH) scheduled. BSR comprises BSR MAC control elements (CE) included in MAC Protocol Data Unit (PDU) . PHR comprises PHR MAC CE included in MACPDU.

The buffer size reported by BSR is computed for each logical channel group (LCG) in which data exists. Each LCG comprises one or more logical channels (LCH), and the maximum number of LCGs is predetermined (for example, four LCGs) . The regarding the association between LCH and LCG may be notified to UE by upper layer signaling (for example, Radio Resource Control (RRC)) signaling, notification data (for example, Master Information Block (MIB), System Information Block (SIB) or the like.

UE transmits BSR when, for example, there is data to be transmitted to one of LCHs belonging to LCG and the predetermined timer expires. The eNB can appropriately control the assignment of uplink radio resources based on the BSR.

The buffer size (BS) field included in BSR MAC CE is a 6-bit index. The association between the index and buffer size is separately defined (, which is called, for example, a BSR table or BS table) and the UE and eNB can judge the BS based on the BS field and the BSR table.

PHR includes, for example, PH, which is the data of the difference between the total transmission power and the maximum transmittable power in a user terminal, and PH, which is the data of the difference between the transmission power of a user terminal for each CC and the maximum transmittable power for each CC. For PH, Type1 and Type2 are supported, and Type 1 PH is for the assumption that only PUSCH is transmitted, whereas Type 2 PH is for the assumption that PUSCH and PUCCH are transmitted.

Moreover, UE controls CCs which execute UL transmission to report the data regarding PH in consideration of actually transmitted power (that is, real PH), and CCs which do not execute UL transmission to report the data regarding PH not dependent on a PUSCH bandwidth (Virtual PH)). PHR containing real PH may be called real PHR, whereas PHR containing virtual PHR may be called virtual PHR.

With the received data regarding the real PHR or virtual PHR, the eNB can control the power of UE in consideration of the uplink transmission power of not only CCs which are transmitting but also those not transmitting.

PHR/BSR MAC CE is generated so as to include the data regarding the buffer size in the-subframe which transmits the MAC CE by PUSCH and the transmitted power. In the unlicensed CCs, the supporting of not only the uplink communications, but also the downlink communications (for example, supporting of Time Division Multiplexing (Time Division Duplexing: TDD) is considered, but no substantial discussion has not been progressed as to how BSR and PHR are configured or by which CC is used to transmit them in the case where CCs which require UL LBT (for example, unlicensed CCs) are set to UE.

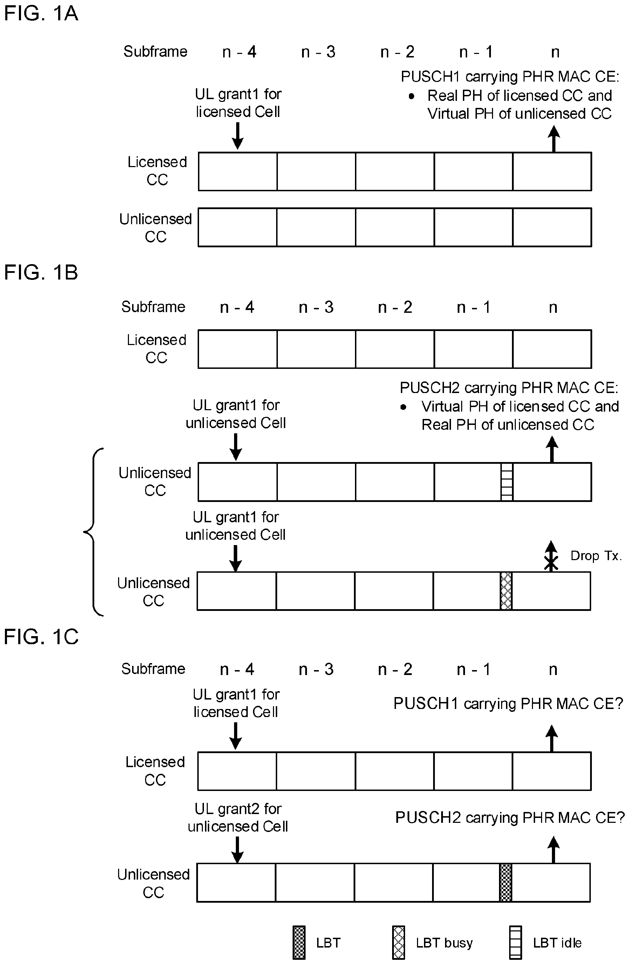

Under the circumstances, the inventors first discussed the scenario that unlicensed CCs are set to UE and PUSCH is scheduled by at least one of the CCs. FIG. 1 is a diagram an example of the scenario unlicensed CCs are set to UE and PUSCH is scheduled by at least one of the CCs. FIG. 1 shows an example in which PHR is transmitted using PUSCH, but this example is similarly applicable also to BSR.

In the example of FIG. 1, UE is set to carry out CA of one licensed CC (also called, for example, a licensed band or licensed carrier) and one unlicensed CC (also called, for example, a unlicensed band or unlicensed carrier) . UE receives UL Grant by at least one CC in subframe n-4 and attempts PUSCH transmission which includes PHR in subframe n. Thus, in PUSCH of the cell scheduled, PHR including real PH of the scheduled cell and virtual PH of the cell not scheduled is transmitted.

Note that from FIG. 1 on, UL Grant received by a licensed CC and PUSCH used for transmission thereby will be called UL Grant 1 and PUSCH 1, respectively, whereas UL Grant received by an unlicensed CC and PUSCH used for transmission thereby will be called UL Grant 2 and PUSCH 2, respectively.

Moreover, from FIG. 1 on, a CC which receives UL Grant (scheduling CC) and a CC (scheduled CC) scheduled by the Grant are the same CC in the descriptions, but the invention is not limited to this. For example, the cross-carrier scheduling may be carried out. Further, in the descriptions, the transmission subframe of uplink data is set to the fourth subframe after UE receives UL Grant, but the invention is not limited to this. For example, the transmission subframe of uplink data may be a subframe after an arbitrary number (for example, x) of subframes after receiving UL Grant.

FIG. 1A shows an example in which UL Grant is received only by a licensed CC and PUSCH transmission is carried out only by a licensed CC. In this case, no transmission is carried out by an unlicensed CC in subframe n, and therefore it is sufficient for PUSCH 1 to transmit only PHR MAC CE including real PH of a licensed CC and virtual PH of an unlicensed CC.

FIG. 1B shows an example in which UL Grant is received only by an unlicensed CC and attempts PUSCH transmission only by an unlicensed CC. In this case, no transmission is carried out by a licensed CC in subframe n, and therefore it is sufficient for PUSCH 2 to transmit only PHR MAC CE including virtual PH of a licensed CC and real PH of an unlicensed CC.

However, PUSCH 2 transmission is possible only when LBT (UL LBT) is executed before transmission of subframe n and the LBT result is LBT_{idle}. If the LBT result is LBT_{busy}, PUSCH transmission is not carried out (dropped) in subframe n. Note that when the LBT result is LBT_{busy}, such a problem arises that PHR is not reported, and therefore the headroom power data of the UE cannot be updated until the base station receives the next PHR report; however the data will never be wrongly updated.

Thus, in the scenario of FIG. 1B, it is not assured to timely feed back PHR/BSR MAC CE at a requested timing. Note that FIG. 1B shows the case where LBT is carried out immediately before subframe n (that is, subframe n-1 or before), but the invention is not limited to this.

FIG. 1C shows an example in which UL Grant is received by both a licensed CC and an unlicensed CC and attempts PUSCH transmission by both of CCs. In the case where PUSCH is scheduled to two or more CCs at the same time as shown in FIG. 1C, it is not defined in the current specification by which CC PHR/BSR MACCE should be sent, but it is dependent on the implementation of UE.

In the scenario of FIG. 1C, if attempting to send PHR/BSR MAC CE only by an unlicensed CC, PHR/BSR MAC CE may not be timely transmitted in some cases as in the scenario of FIG. 1B.

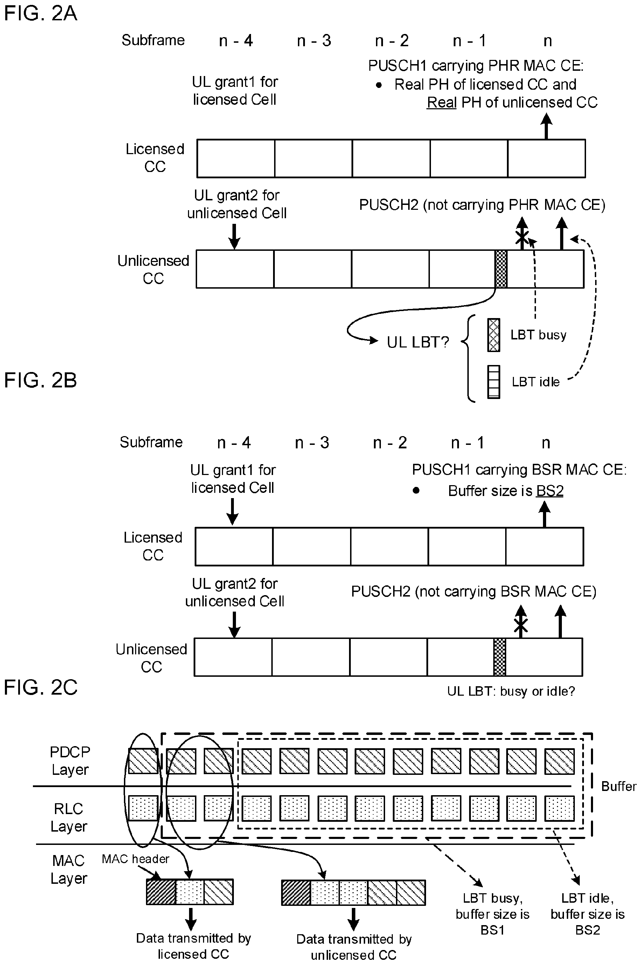

Moreover, in the scenario of FIG. 1C, if the PHR/BSR calculation and generation methods of the existing LTE are used to send PHR/BSR MAC CE by a licensed CC, a problem will arise, which will be described further with reference to FIG. 2.

FIG. 2 is a diagram illustrating the problem created when PUSCH transmission is scheduled to both a licensed CC and an unlicensed CC at the same time. FIG. 2 shows the case on the assumption that a signal which does not include PHR/BSR MAC CE is transmitted by PUSCH 2.

FIG. 2A shows an example in the scenario of FIG. 1C, in which PHR MAC CE is transmitted by PUSCH 1. Here, both CCs are scheduled, UE transmits PHR MAC CE including real PH of the licensed CC and real PH of the unlicensed CC by PUSCH 1.

However, the transmission by an unlicensed CC by PUSCH 2 is dependent on the LBT result. Therefore, if the LBT result is LBT_{busy}, PHR transmitted by PUSCH 1 does not conform to the actual status of the unlicensed CC.

FIGS. 2B and 2C show an example in the scenario of FIG. 1C, in which BSR MAC CE is transmitted by PUSCH 1. Here, both CCs are scheduled, UE transmits, by PUSCH 1, BSR MAC CE including the buffer size (here, referred to as BS2), which decreases in size by transmission in PUSCH 1 and PUSCH 2.

However, the transmission by an unlicensed CC by PUSCH 2 is dependent on the LBT result. Therefore, if the LBT result is LBT_{busy}, PHR transmitted by PUSCH 1 does not conform to the actual status.

FIG. 2C is a diagram showing an example of the contents of the buffer for each layer of UE. FIG. 2C schematically shows a Packet Data Convergence Protocol (PDCP) layer, a Radio Link Control (RLC) layer and a Medium Access Control (MAC) layer. Each square figure shown in FIG. 2C schematically indicates an item of data.

In FIG. 2C, when a LBT result is LBT_{idle}, the actual buffer size of UE is BS2. On the other hand, when the LBT result is LBT_{busy}, PUSCH 2 transmission is not carried out in subframe n, and therefore the actual buffer size is BS1 (the buffer size decreased in the transmission only by PUSCH 1).

As described above, in the case where the PUSCH transmission is scheduled to both a licensed CC and an unlicensed CC at the same time, if the PHR/BSR calculation and generation methods of the existing LTE are used, PHR/BSR reported to eNB may not be the one in which the actual PH/buffer size is reflected. If eNB carries out scheduling and power controls using PHR/BSR not conforming to the actual status, communication delay, degradation of frequency utilization efficiency, etc. may occur.

Under the circumstances, the inventors focused on determining what sort of contents and from which CC, UE reports MAC CE based on the LBT result of the unlicensed CC to which PUSCH is scheduled. According to the above-described aspect of the present invention, PHR/BSR conforming to the actual status can be reliably transmitted at the scheduled timing.

Hereafter, embodiments of the present invention will be described in detail with reference to accompanying drawings. Each embodiment will be described in connection with the case where CA is applied based on that a licensed band is set to Primary Cell (PCell) and an unlicensed band is set to Secondary Cell (SCell), but the invention is not limited to this. In other words, the present invention encompasses as its embodiments such a structure that a licensed band (or PCell) is assigned as a carrier to which listening (LBT) is not set (, which is also called a carrier not requiring LBT to be carried out, carrier which does not or cannot execute LBT, or the like) and an unlicensed band (or SCell) is assigned as a carrier to which listening (LBT) is set (, which is also called a carrier requiring LBT, carrier which executes or should execute LBT, or the like).

Moreover, the combination of the carrier to which LBT is not set and that LBT is set, or PCell and SCell is not limited to the above-described structure. Note that SCell of an unlicensed band may be called LAA SCell, for example.

### (Radio communication method)

The PHR/BSR reporting method in a subframe (scheduled subframe) in which PUSCH is scheduled two or more CCs at the same time, according to the present invention can be mainly divided into the following three embodiments.

In the first embodiment, in the case of LBT_{idle} in an unlicensed CC, UE sends PHR/BSR by the unlicensed CC. Further, regardless of the LBT result in an unlicensed CC, UE transmits PHR/BSR by a licensed CC.

In second embodiment, in the case of LBT_{idle} in unlicensed CC, UE sends PHR/BSR by the unlicensed CC. Further, in the case of LBT_{busy} in an unlicensed CC, PHR/BSR is transmitted by a licensed CC.

In the third embodiment, regardless of the LBT result of an unlicensed CC, PHR/BSR is not sent by the unlicensed CC. Meanwhile, PHR/BSR based on the consideration of the LBT result of the unlicensed CC is transmitted by a licensed CC.

In each of the embodiments, UE prepares for (generates) a plurality of PHR/BSR MAC CE for transmission. One is PHR/BSR MAC CE on the assumption that the unlicensed CC is in a busy state, which will be also carried PHR/BSR MAC CE1 hereinafter. Another is PHR/BSR MAC CE on the assumption that the unlicensed CC is in an idle state, which will be also called PHR/BSR MAC CE2 hereinafter.

PHR MAC CE1 comprises real PH of a licensed CC and virtual PH of an unlicensed CC. PHR MAC CE2 comprises real PH of a licensed CC and real PH of an unlicensed CC.

BSR MAC CE1 comprises data regarding the buffer size (for example, BS1 of FIG. 2C) in which the size is decreased by PUSCH (PUSCH 1) transmission by a licensed CC. The buffer size reported by BSR MAC CE1 may be that obtained by subtracting the data amounts transmitted by the licensed CC and by the unlicensed CC from the total buffer size of the PDCP and RLC layer.

BSR MAC CE2 comprises the data regarding the buffer size (for example, BS2 of FIG. 2C) in which the size is decreased by PUSCH (PUSCH 1) transmission by a licensed CC and PUCSH (PUSCH 2) by an unlicensed CC. The buffer size reported by BSR MAC CE2 may be the buffer size which subtracted the data volume transmitted by the data volume and unlicensed CC which are transmitted by licensed CC from the total buffer size of PDCP and an RLC layer.

UE can switch the transmission data to be transmitted according to a LBT result in a short time by preparing in advance some transmission data including one of a plurality of PHR/BSR MAC CEs.

Hereinafter, the embodiments will be described in detail. Each embodiment will be described in connection with the case MAC CE includes both PHR and BSR, but the application of the present invention is not limited to this. For example, each embodiment is applicable also to control of MAC CE including one of PHR and BSR.

Further, the following descriptions are provided in connection with the case where PUSCH is scheduled to both one licensed CC and one unlicensed CC at the same time, but the application of the present invention is not limited to this. Each embodiment is applicable for such cases where the number of licensed CCs and unlicensed CCs scheduled at the same time is set to an arbitrary number of two or more.

### <First embodiment>

In the first embodiment of the present invention, UE prepares PHR/BSR MAC CE1 as PHR/BSR MAC CE for a licensed CC (one to be transmitted by a licensed CC), and also PHR/BSR MAC CE2 as PHR/BSR MAC CE for an unlicensed CC (one to be transmitted by an unlicensed CC).

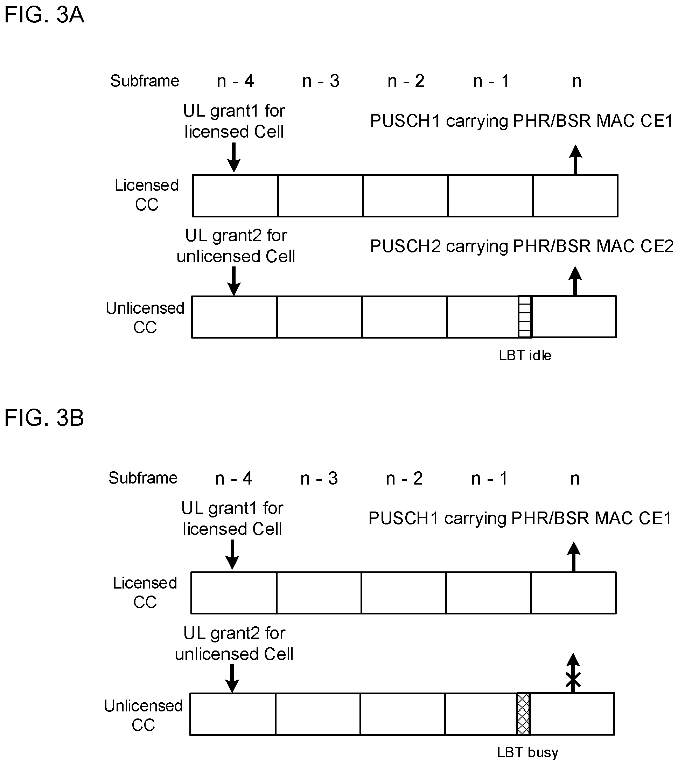

FIG. 3 is a diagram showing an example of the PHR/BSR MAC CE transmission control of the first embodiment. FIG. 3 shows a case similar to that of FIG. 1C.

When the LBT result of an unlicensed CC is LBT_{idle}, UE transmits PHR/BSR MAC CE2 by the unlicensed CC (FIG. 3A), whereas when the LBT result is LBT_{busy}, PHR/BSR MAC CE2 is not transmitted by the unlicensed CC (FIG. 3B). Further, regardless of the LBT result, PHR/BSR MAC CE1 is transmitted by a licensed CC (FIG. 3A and FIG. 3B).

In scheduled subframes of a plurality of CCs, eNB attempt to receive PUSCH by these CCs. Here, when eNB receives both PHR/BSR MAC CE1 and PHR/BSR MAC CE2 (, which is equivalent to the case where the LBT result is LBT_{idle} in UE), the scheduling and power control are carried out using PHR/BSR MAC CE2 received by an unlicensed CC. On the other hand,
when eNB receives only PHR/BSR MAC CE1 (, which is equivalent to the case where the LBT result is LBT_{busy} in UE), the scheduling and power control are carried out using PHR/BSR MAC CE1 received by a licensed CC.

According to the first embodiment, UE reliably reports PHR/BSRMAC CE1 by a licensed CC and reports PHR/BSR MAC CE2 by an unlicensed CC only when transmittable; therefore it is possible to transmit PHR/BSR conforming to the actual status reliably at a scheduled timing.

### <Second embodiment>

In the second embodiment of the present invention, UE prepares PHR/BSR MAC CE1 as PHR/BSR MAC CE for a licensed CC and also PHR/BSR MAC CE2 as PHR/BSR MAC CE for an unlicensed CC as in the first embodiment,.

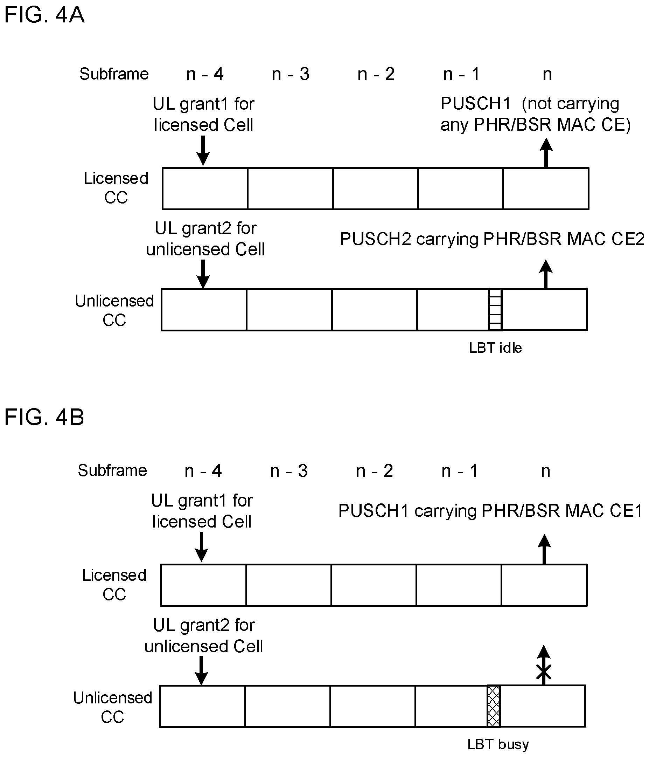

FIG. 4 is a diagram showing an example of the PHR/BSR MAC CE transmission control of the second embodiment. FIG. 4 shows a case similar to that of FIG. 1C.

When the LBT result of the unlicensed CC is LBT_{idle}, UE transmits PHR/BSR MAC CE2 by the unlicensed CC and does not transmit PHR/BSR MAC CE1 by the licensed CC (FIG. 4A). In this case, UE transmits PUSCH 1 which does not include PHR/BSR MAC CE by the licensed CC.

Moreover, when the LBT result is LBT_{busy}, UE does not transmit PHR/BSR MAC CE2 by the unlicensed CC, but transmits PHR/BSR MACCE1 by the licensed CC (FIG. 4B).

That is, in the second embodiment, UE determines (judges) whether to transmit PHR/BSR MAC CE by a licensed CC based on the LBT result of an unlicensed CC. For this reason, UE prepares, for the licensed CC, two kinds of transmission data (transmission data not including PHR/BSR MAC CE and data including PHR/BSR MAC CE1), and carries out switching process as to which is to be transmitted based on the LBT result.

In the scheduled subframes of a plurality of CCs, eNB attempt to receive PUSCH by the plurality of CCs. Here, eNB carries out the scheduling and power control using PHR/BSR MAC CE1 or PHR/BSR MAC CE2 received.

According to the second embodiment described above, UE reliably reports PHR/BSR MAC CE1 or PHR/BSR MAC CE2 by a licensed CC or unlicensed CC, and therefore PHR/BSR conforming to the actual status can be transmitted reliably at a scheduled timing. Here, only one MAC CE is actually sent by a scheduled subframe, the increase in communication overhead can be suppressed.

Moreover, since MAC CE is transmitted by an unlicensed CC when transmittable by an unlicensed CC, the overhead related to the transmission of MAC CE can be distributed to a plurality of CCs.

### <Third embodiment>

In the third embodiment of the present invention, UE prepares PHR/BSR MAC CE2 as PHR/BSR MAC CE for the case where the LBT result of an unlicensed CC is LBT_{idle}, and also prepares PHR/BSR MAC CE1 as PHR/BSR MAC CE for the case where the LBT result of an unlicensed CC is LBT_{busy}.

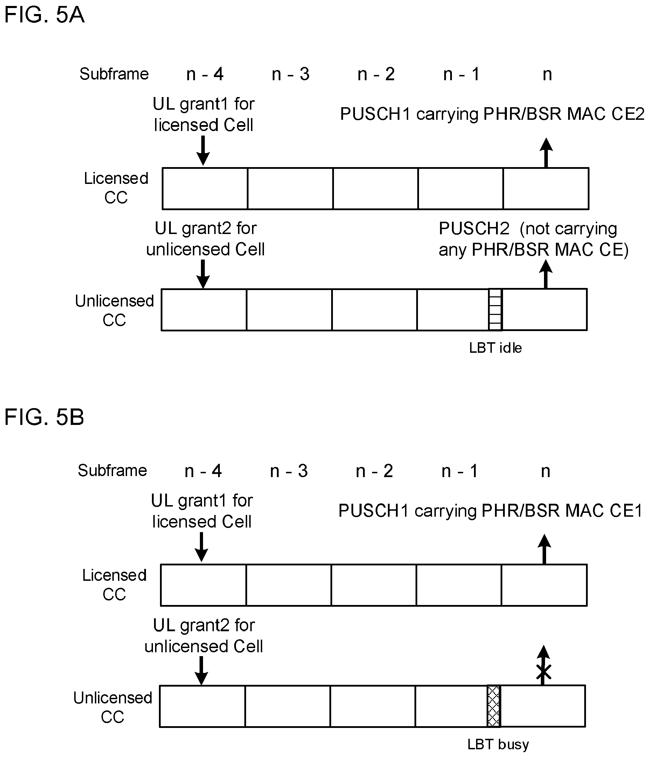

FIG. 5 is a diagram showing an example of the PHR/BSR MAC CE transmission control of the third embodiment. FIG. 5 shows a case similar to that of FIG. 1C.

When the LBT result of an unlicensed CC is LBT_{idle}, UE transmits PUSCH 2 which does not include PHR/BSR MAC CE by the unlicensed CC and transmits PHR/BSR MAC CE2 by a licensed CC (FIG. 5A).

Further, UE transmits PHR/BSR MAC CE1 by the licensed CC when the LBT result is LBT_{busy} (FIG. 5B).

That is, in the third embodiment, UE determines (judges) the contents of PHR/BSR MAC CE to be reported by the licensed CC depending on the LBT result of the unlicensed CC. For this reason, UE prepares, for the licensed CC, two kinds of transmission data (data including PHR/BSR MAC CE1 and data including PHR/BSR MAC CE2), and carries out switching process as to which is to be transmitted based on the LBT result.

In scheduled subframes of a plurality of CCs, eNB attempts to receive PUSCH by the plurality of CCs. Here, eNB carries out the scheduling and power control using PHR/BSR MAC CE1 or PHR/BSR MAC CE2 received by a licensed CC. In other words, eNB may process on the assumption that PHR/BSR MAC CE is not received by an unlicensed CC.

According to the second embodiment described above, UE reliably reports PHR/BSR MAC CE1 or PHR/BSR MAC CE2 by a licensed CC or unlicensed CC, and therefore PHR/BSR conforming to the actual status can be transmitted reliably at a scheduled timing. Here, only one MAC CE is actually sent by a scheduled subframe, the increase in communication overhead can be suppressed.

In each of the above-described embodiments, eNB may notify to UE the data regarding the PHR/BSR reporting method by subframes in which PUSCH is scheduled to two or more CCs at the same time. The notification may be carried out by upper layer signaling (for example, RRC signaling, notification data), physical layer signaling (for example, Downlink Control Information (DCI)), other signals or a combination of any of these.

The data regarding the PHR/BSR report method may include at least one of the data which specifies a method discussed in by the first to third embodiments, and the data regarding CCs which transmit PHR/BSR MAC CE when the LBT result of an unlicensed CC is LBT_{idle} (LBT_{busy}).

### (Radio communication system)

Hereinafter, the structure of the radio communication system according to an embodiment of the present invention will be described. In this radio communication system, one of or any combination of the radio communication methods according to the above-described embodiments is applied.

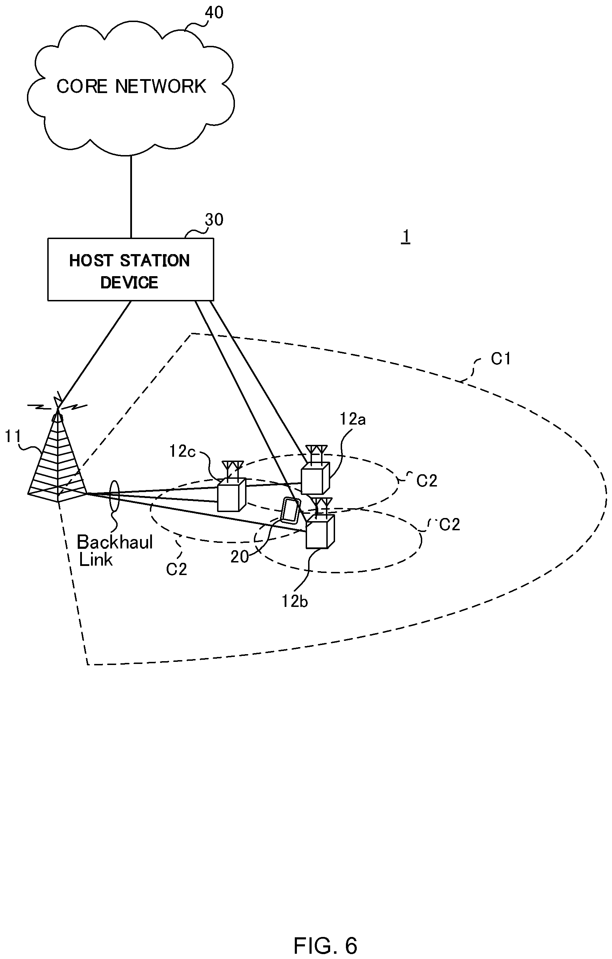

FIG. 6 is a diagram showing an example of the schematic structure of a radio communication system according to an embodiment of the present invention. In a radio communication system 1, carrier aggregation (CA) and/or dual connectivity (DC) are applicable, in which a plurality of fundamental frequency blocks (component carriers), one unit of each of which is a system bandwidth of a LTE system, are integrated. The radio communications system 1 includes radio base stations (for example, LTE-U base stations) which can use an unlicensed band.

The radio communication system 1 may be called SUPER 3G, LTE-Advanced (LTE-A), IMT-Advanced, 4th-generation mobile communication system (4G), 5th-generation mobile communication system (5G), Future Radio Access (FRA) or the like.

The radio communication system 1 shown in FIG. 6 comprises a radio base station 11 forming a macro-cell C1, and radio base stations 12 (12a to 12c) each located in the macro-cell C1 and forming a small cell C2 narrower than the macro-cell C1. Moreover, a user terminal 20 is placed in the macro-cell C1 and in each of the small cells C2. For example, it is considered here that macro cell C1 is used in a licensed band, small cell C2 is used in an unlicensed band (LTE-U) . It is also considered that a part of a small cell is used in a licensed band and other small cells are in an unlicensed band.

The user terminal 20 is connectable with both sides of the radio base station 11 and the radio base stations 12. It is assumed here that the user terminal 20 uses the macro-cell C1 and the small cells C2, which use different frequencies, simultaneously by CA or DC. For example, assist data (for example, DL signal configuration) regarding the radio base stations 12 (for example, LTE-U base stations) which use an unlicensed band can be transmitted to the user terminal 20 from the radio base station 11 which uses a licensed band. Further, when executing CA of a licensed band and an unlicensed band, it is possible to configure that one radio base station (for example, radio base station 11) controls the schedule of the licensed band cell and the unlicensed band cell.

Note that the user terminal 20 may not be connected to the radio base station 11, but connected to a radio base station 12. For example, a radio base station 12 using an unlicensed band may be connected to the user terminal 20 on a stand-alone basis. In this case, the radio base station 12 control the schedule of the unlicensed band cell.

Between the user terminal 20 and the radio base station 11, a carrier with narrow bandwidth (referred to as the existing carrier, Legacy carrier, etc.) is used in a relatively low frequency band (for example, 2 GHz) for communication. On the other hand, between the user terminal 20 and the radio base stations 12, a carrier with wide bandwidth may be used in a relatively high frequency band (for example, 3.5 GHz, 5 GHz, etc.), or the same carrier as that used for the radio base station 11 may be used. Note that the configuration of the frequency bands adopted by the radio base stations is not limited to this .

Between the radio base station 11 and the radio base stations 12 (or between two radio base stations 12), wired connection (for example, an optical fiber, X2 interface, etc. based on the common public radio interface (CPRI)), or wireless connection may be established.

The radio base station 11 and the radio base stations 12 are each connected to a host device 30 and also to a core network 40 through the host station device 30. The host station device 30 includes, for example, an access gateway unit, a radio network controller (RNC), a mobility management entity (MME) and the like, but it is not limited to this. Each of the radio base stations 12 may be connected to the host station device 30 through the radio base station 11.

The radio base station 11 is a station which handling relatively wide coverage, and may be called a macro base station, an aggregation node, eNB (eNodeB), a transmission/receiving point, or the like. On the other hand, the radio base stations 12 are each a station handling a local coverage, and may be called a small base station, a micro base station, a pico base station, a femto base station, HeNB (Home eNodeB), RRH (Remote Radio Head), a transmission/receiving point, or the like. Hereafter, when the radio base stations 11 and 12 are not distinguished from each other, they will be generally named as radio base stations 10. Further, the radio base stations 10 which share and use the same unlicensed band should preferably be configured to synchronize in time.

The user terminals 20 are each a terminal supporting various communication modes such as LTE and LTE-A, and they may include not only mobile communication terminals but also fixed communication terminals.

In the radio communication system 1, the orthogonal frequency division multiple access (OFDMA) is applied to the downlink, and the single career frequency division multiple access (SC-FDMA) is applied to the uplink as the radio access mode. OFDMA is a multi-carrier transmission system which carries out communications by dividing a frequency band into a plurality of narrow frequency bands (subcarriers) and mapping data in each of the subcarriers. SC-FDMA is a single carrier transmission system which reduces interference between terminals by dividing a system bandwidth into bands comprising one or continuous resource blocks for each terminal for a plurality of terminals to be able to use different bands among each other. Note that the uplink and downlink radio access modes are not limited to the combination of these.

The radio communication system 1 uses, as the downlink channel, the physical downlink shared channel (PDSCH) shared by the user terminals 20, physical broadcast channel (PBCH:), downlink L1/L2 control channel and the like. User data, upper layer control information, system information block (SIB), etc. are transmitted by PDSCH. Further, the master information block (MIB) is transmitted by PBCH.

The downlink L1/L2 control channel includes Physical Downlink Control Channel (PDCCH), Enhanced Physical Downlink Control Channel (EPDCCH), Physical Control Format Indicator Channel (PCFICH), Physical Hybrid-ARQ Indicator Channel (PHICH), etc. The downlink control information (DCI) including the scheduling data of PDSCH and PUSCH are transmitted by PDCCH. The number of OFDM symbols used for PDCCH is transmitted by PCFICH. The acknowledgement signal (ACK/NACK) for the delivery of HARQ to PUSCH is transmitted by PHICH. The EPDCCH is subjected to frequency division multiplexing along with PDSCH, and used for transmission of DCI or the like, as in the case of PDCCH.

The radio communication system 1 uses, as the uplink channel, an uplink shared channel (Physical Uplink Shared Channel: PUSCH) shared by the user terminals 20, an uplink L1/L2 control channel (Physical uplink control channel: PUCCH), a random access channel (Physical Random Access Channel: PRACH), etc. PUSCH may be called an uplink data channel. The user data and upper layer control information are transmitted by PUSCH. The downlink wireless quality information (Channel Quality Indicator:CQI), an acknowledgment signal, etc. are transmitted by PUCCH. The random access preamble for establishing connection with a cell is transmitted by PRACH.

In the radio communications system 1, Cell-specific Reference Signal (CRS), Channel State Information-Reference Signal (CSI-RS), DeModulation Reference Signal (DMRS) and the like are transmitted as downlink reference signals. Further, in the radio communications system 1, measurement reference signal (Sounding Reference Signal: SRS), DeModulation Reference Signal (DMRS) and the like are transmitted as uplink reference signals. DMRS may be called UE-specific Reference Signal. Moreover, the reference signals transmitted are not limited to these.

### (Radio base stations)

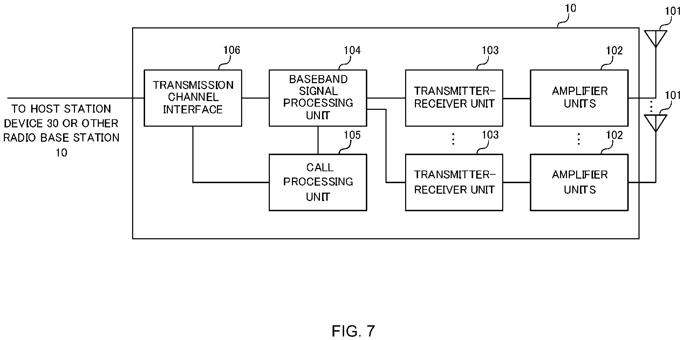

FIG. 7 is a diagram showing an example of the entire configuration of a radio base station according to an embodiment of the present invention. A radio base station 10 comprises a plurality of transmission/receiving antennas 101, amplifier units 102, transmitter-receiver units 103, a baseband signal processing unit 104, a call processing unit 105 and a transmission channel interface 106. Note that as to the transmission/receiving antenna 101, amplifier unit 102 and transmitter-receiver unit 103, it suffices if the station is configured to include one or more of each.

The user data transmitted from the radio base station 10 to the user terminal 20 by the downlink is input from the host station device 30 to the baseband signal processing unit 104 through the transmission channel interface 106.

In the baseband signal processing unit 104, the user data is subjected to transmission processings such as processing of PDCP (Packet Data Convergence Protocol) layer, division and coupling of user data, transmission of RLC (Radio Link Control) layers such as retransmission control of MAC (Medium Access Control) (for example, transmission of HARQ (Hybrid Automatic Repeat reQuest)), scheduling, transmission format selection, channel coding, Inverse Fast Fourier Transform (IFFT) processing, pre-coding, and then transmitted to the transmitter-receiver unit 103. Further, the downlink control signal is also subjected to transmission processing such as channel coding and Inverse Fast Fourier Transform and then transmitted to the transmitter-receiver unit 103.

The transmitter-receiver unit 103 converts the baseband signal pre-coded for each antenna and outputted from the baseband signal processing unit 104 into a radio frequency band, to be transmitted. The radio frequency signal subjected to frequency conversion in the transmitter-receiver unit 103 is amplified by the amplifier unit 102, and transmitted from the transmitter-receiver antennas 101.

The transmitter-receiver unit 103 can transmit/receive a UL/DL signal by an unlicensed band. The transmitter-receiver unit 103 may be configured to be able to transmit/receive a UL/DL signal by a licensed band. The transmitter-receiver unit 103 may be configured to be able to transmit/receive a UL/DL signal by a licensed band. The transmitter-receiver units 103 may be formed from transmitters/receivers, transmission-receiving circuits, or transmission-receiving equipment which can be described based on the common knowledge in the technical field of the present invention. The transmitter-receiver units 103 each may be configured as one unit of transmitter-receiver, or to include a transmitter and receiver.

On the other hand, as to the uplink signal, the radio frequency signal received with the transmitter-receiver antenna 101 is amplified by the amplifier unit 102. The transmitter-receiver unit 103 receives the uplink signal amplified by the amplifier unit 102. The transmitter-receiver unit 103 subjects the received signal to frequency conversion into a baseband signal and outputs it to the baseband signal processing unit 104.

In the baseband signal processing unit 104, the user data contained in the input uplink signal is subjected to Fast Fourier Transform (FFT) processing, Inverse Discrete Fourier Transform (IDFT) processing, error correction decoding, reception processing of MAC retransmission control, and reception processing of an RLC layer and a PDCP layer, and transmitted to the host station device 30 through the transmission channel interface 106. The call processing unit 105 performs call processings such as setting and releasing (cancelling) of a communication channel, management of the status of the radio base station 10 and management of a radio resource.

The transmission channel interface 106 transmits/receives signals with the host station device 30 through a predetermined interface. The transmission channel interface 106 may transmit/receive signals (backhaul signaling) with an adjacent radio base station 10 via a base station interface (for example, an optical fiber or X2 interface conforming with Common Public Radio Interface (CPRI)).

The transmitter-receiver unit 103 transmits the uplink control information (UL Grant) used to schedule the uplink data transmission to the user terminal 20. The UL Grant may be transmitted by PCell or SCell. The transmitter-receiver unit 103 may transmit a downlink signal including data regarding a carrier requiring the listening (UL LBT), the data (for example, TPC command) for controlling the uplink transmission power of the user terminal 20, the PHR setting data (data regarding the timer used as conditions for PHR trigger, a threshold and the like), etc.

Further, the transmitter-receiver unit 103 receives the uplink signal (for example, MAC signaling) including PHR (PHR MAC CE) and/or BSR (BSR MAC CE) from the user terminal 20.

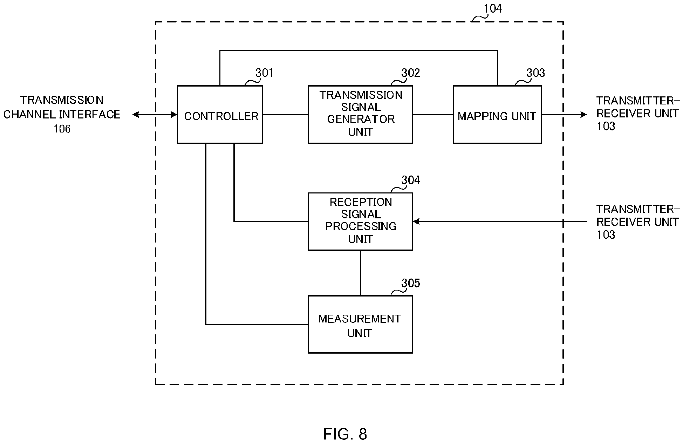

FIG. 8 is a diagram showing an example of the functional configuration of the radio base station according to this embodiment. Note that FIG. 8 mainly shows only the functional block of the characterizing features of this embodiment and it is assumed that the radio base station 10 naturally includes other functional blocks necessary for radio communications. As shown in FIG. 8, the baseband signal processing unit 104 comprises at least a controller (scheduler) 301, a transmission signal generator unit 302, a mapping unit 303, a reception signal processing unit 304 and a measurement unit 305. Note that these structural elements should only be included in the radio base station 10 and some or all of them need not to be included in the baseband signal processing unit 104.

The controller (scheduler) 301 controls the entire radio base station 10. When scheduling of a licensed band and a unlicensed band is carried out by one controller (scheduler) 301, the controller 301 controls communications of the licensed band cell and the unlicensed band cell. The controller 301 can be formed from any controller, control circuit or control unit which can be described based on the common knowledge in the technical field of the present invention.

The controller 301 controls, for example, the generation of signals by the transmission signal generator unit 302, and the assignment of signals by the mapping unit 303. Further, the controller 301 controls the reception processing of signals by the reception signal processing unit 304 and the measurement of signals by the measurement unit 305.

The controller 301 controls the scheduling (for example, resource assignment) of system data, downlink signals transmitted by PDSCH and downlink control signals transmitted by PDCCH and/or EPDCCH. Further, it controls the scheduling of reference signals such as synchronization signals (Primary Synchronization Signal (PSS)/Secondary Synchronization Signal (SSS)), CRS, CSI-RS and DM-RS.

Moreover, the controller 301 controls the scheduling of uplink data signals transmitted by PUSCH, uplink control signals transmitted by PUCCH and/or PUSCH (for example, a delivery acknowledgement signal (HARQ-ACK)), a random access preamble transmitted by PRACH and a uplink reference signal, and the like.

The controller 301 executes control to transmit the setting data for communication nu using both licensed CC and unlicensed CC to the user terminal 20. Further, the controller 301 executes control to transmit the downlink control information (UL Grant) which instructs to carry out PUSCH transmission by both licensed CC and unlicensed CC to the user terminal 20 in a certain identical subframe.

The controller 301 executes control to receive the first MAC control element (PHR/BSR MAC CE1) or the second MAC control element (PHR/BSR MAC CE2) by at least one of the first carrier (for example, licensed CC) and the second carrier (for example, unlicensed CC) in the predetermined subframe instructed to carry out PUSCH transmission simultaneously by a plurality of CCs (, which will be called a simultaneous transmission subframe hereinafter).

The controller 301 judges the buffer size regarding a predetermined LCG (or a total LCG) of the user terminal 20 based on BSR input from the reception signal processing unit 304. Further, the controller 301 can control (schedule) the assignment of uplink radio resources based on the buffer size of the user terminal 20. For example, the controller 301 executes control to generate UL Grant based on the buffer size, to be transmitted.

The controller 301 acquires the PH of each active CC used by the user terminal 20 based on the PHR input from the reception signal processing unit 304. Further, the controller 301 computes (estimates) the power headroom for each CC based on the PHR notified from the user terminal 20. Then, the controller 301 may carry out the scheduling and transmission power control in consideration of the power headroom.

Note that when receiving both the first MAC control element and the second MAC control elements of in a simultaneous transmission subframe, the controller 301 may carry out the scheduling and power control using the second MAC control element, or the scheduling and power control using the MAC control element received by the unlicensed CC.

Based on the instruction from the controller 301, the transmission signal generator unit 302 generates downlink signals (downlink control signal, downlink data signal, downlink reference signal etc.) and outputs them to the mapping unit 303. The transmission signal generator unit 302 can be formed from a signal generating device, signal generation circuit or signal generation device which can be described based on the common knowledge in the technical field of the present invention.

The transmission signal generator unit 302 generates scheduling data (downlink DL assignment notifying the assignment information of downlink signals and an UL grant notifying the assignment information of uplink signals) based on, for example, the instruction from the controller 301. Further, the downlink signals are subjected to coding and modulation processing according to the coding rate, the modulation mode, etc. determined based on the channel state information (CSI) from each user terminal 20, etc. Further, the transmitting signal generator unit 302 may generate a discovery signal including PSS, SSS, CRS, CSI-RS, etc.

The mapping unit 303 maps the downlink signal generated in the transmission signal generator unit 302 in predetermined radio resources based on the instruction from the controller 301, and outputs it to the transmitter-receiver unit 103. The mapping unit 303 can be formed from any mapper, mapping circuit or wafer scanner which can be described based on the common knowledge in the technical field of the present invention.

The reception signal processing unit 304 performs reception processings (for example, demapping, demodulation, decoding, etc.) to the reception signal input from the transmitter-receiver unit 103. Here, the reception signals are, for example, uplink signals transmitted from the user terminal 20 (uplink control signal, uplink data signal, uplink reference signal, etc.). The reception signal processing unit 304 can be formed from a signal processor, signal processing circuit or signal processing device which can be described based on the common knowledge in the technical field of the present invention.

The reception signal processing unit 304 outputs data decoded by the reception processing to the controller 301. For example, when PUCCH including HARQ-ACK is received, HARQ-ACK is outputted to the controller 301. Further, the reception signal processing unit 304 outputs the reception signals and signals after the reception processing to the measurement unit 305.

The measurement unit 305 measures the received signals. The measurement unit 305 can be formed from any measuring instrument, measurement circuit or measuring device which can be described based on the common knowledge in the technical field of the present invention.

The measurement unit 305 carries out LBT on the carrier (for example, unlicensed band) to which LBT is set based on the instruction from the controller 301, and outputs the LBT result (for example, the judgment result as to whether the channel state is idol or busy) to the controller 301.

The measurement unit 305 may measure, for example, the received power of the signal received (such as Reference Signal Received Power (RSRP)), the received signal strength (for example, Received Signal Strength Indicator (RSSI)), the reception quality (such as Reference Signal Received Quality (RSRQ)), the channel state, etc. Measurement results may be outputted to the controller 301.

### (User terminal)

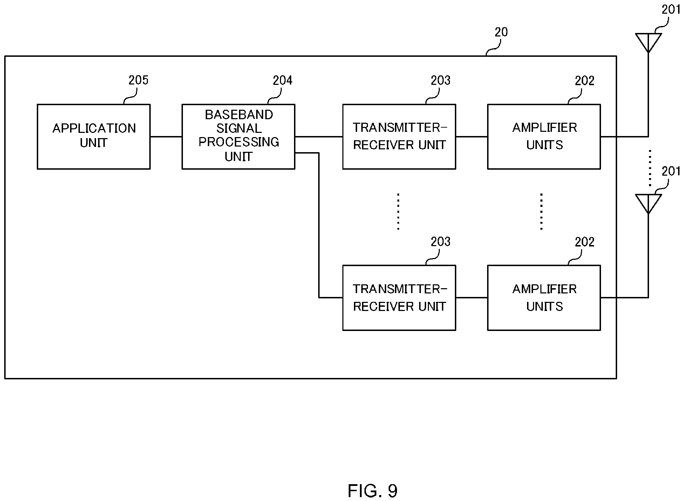

FIG. 9 is a diagram showing an example of the entire configuration of the user terminal to according to this embodiment. The user terminal 20 comprises a plurality of transmission/receiving antennas 201, amplifier units 202, transmitter-receiver units 203, a baseband signal processing unit 204 and an application unit 205. Note that as to the transmission/receiving antenna 201, amplifier unit 202 and transmitter-receiver unit 203, it suffices if the terminal is configured to include one or more of each.

The radio frequency signal received with the transmitter-receiver antenna 201 is amplified in the amplifier unit 202. The transmitter-receiver unit 203 receives the downlink signal amplified in the amplifier unit 202. The transmitter-receiver unit 203 subjects the reception signal to frequency conversion into a baseband signal, and outputs it to the baseband signal processing unit 204. The transmitter-receiver unit 203 can transmit/receive UL/DL signals by an unlicensed band. The transmitter-receiver unit 203 may be configured to be able to transmit/receive UL/DL signals by a licensed band.

The transmitter-receiver unit 203 may be formed from a transmitter/receiver, a transmitter-receiver circuit or transmitting/receiving equipment which can be described based on the common knowledge in the technical field of the present invention. The transmitter-receiver units 103 each may be configured as one unit of transmitter-receiver, or to include a transmitter and receiver.

The baseband signal processing unit 204 performs reception processings such as FFT processing, error correction decoding and retransmission control to the input baseband signal. The downlink user data is transmitted to the application unit 205. The application unit 205 performs processing of the layers higher than the physical layer or MAC layer. Moreover, of the downlink data, the notification data

On the other hand, the user data of the uplink link is input to the baseband signal processing unit 204 from the application unit 205. In the baseband signal processing unit 204, the data is subjected to the transmitting processing of retransmission control (for example, transmitting processing of HARQ), channel coding, precoding, the Discrete Fourier Transform (DFT) processing, IFFT processing, etc., and then transmitted to the transmitter-receiver unit 203. The transmitter-receiver unit 203 converts the baseband signal output from the baseband signal processing unit 204 into a radio frequency band, to be transmitted. The radio frequency signal subjected to the frequency conversion in the transmitter-receiver unit 203 is amplified by the amplifier unit 202 and transmitted from the transmitter-receiver antenna 201.

The transmitter-receiver unit 203 receives UL Grant from the radio base station 10. The transmitter-receiver unit 203 may receive a downlink signal including one of the data regarding a carrier requiring the listening (UL LBT), a TPC command, PHR setting data, etc.

Further, the transmitter-receiver unit 203 transmits the uplink signal (for example, MAC signaling) including PHR/BSR MAC CE to the radio base station 10.

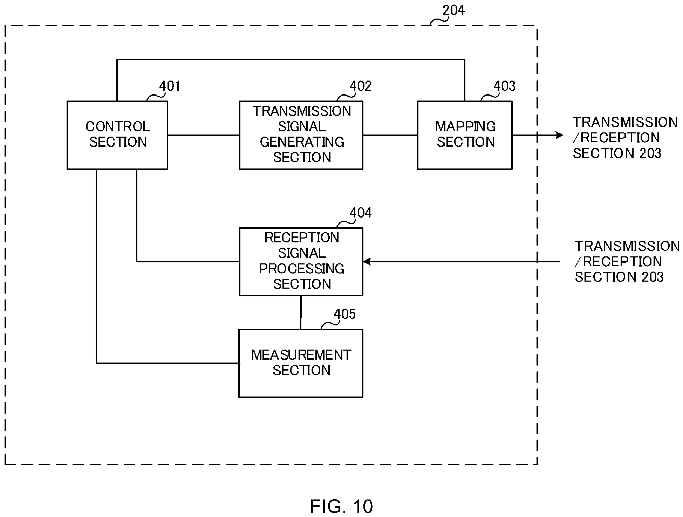

FIG. 10 is a diagram showing an example of the functional constitution of the user terminal to according to this embodiment. FIG. 10 mainly shows only the functional block of the characterizing features of this embodiment and it is assumed that the user terminal 20 naturally includes other functional blocks necessary for radio communications. As shown in FIG. 10, the baseband signal processing unit 204 comprises at least a controller 401, a transmission signal generator (unit) 402, a mapping unit 403, a reception signal processing unit 404 and a measurement unit 405. Note that these structural elements should only be included in the user terminal 20 and some or all of them need not to be included in the baseband signal processing unit 204.

The controller 401 controls the entire user terminal 20. The controller 401 can be formed from a controller, control circuit or control unit which can be described based on the common knowledge in the technical field of the present invention.

The controller 401 controls, for example, the generation of signals by the transmission signal generator unit 402, and the assignment of signals by the mapping unit 403. Further, the controller 401 controls the reception processing of signals by the reception signal processing unit 404 and the measurement of signals by the measurement unit 405.

The controller 401 acquires the downlink control signal transmitted from a radio base station 10 (signal transmitted by PDCCH/EPDCCH) and the downlink data signal (signal transmitted by PDSCH) from the reception signal processing unit 404. The controller 401 controls the generation of uplink control signals (for example, delivery acknowledgment signal (HARQ-ACK) etc.) or uplink data signals based on the result of judgment as to whether the retransmission control of the downlink control signal or downlink data signal is required.

The controller 401 may control the transmission of the uplink signal (for example, PUSCH) in an unlicensed CC to the transmission signal generator unit 402 and the mapping part 403 according to the LBT result obtained by the measurement unit 405.

Further, the controller 401 executes control to communicate using both licensed CC and unlicensed CC based on the data notified from the radio base stations 10. When the reception signal processing unit 404 acquires downlink control information (UL Grant) instructing PUSCH transmission by both licensed CC and unlicensed CC in a certain identical subframe, the controller 401 executes transmission control based on the LBT result (listening result) input from the measurement unit 405.

More specifically, the controller 401 executes control to transmit the first MAC control element (PHR/BSR MAC CE1) or the second MAC control element (PHR/BSR MAC CE2) by at least one of the first carrier (for example, licensed CC) and the second carrier (for example, unlicensed CC) in the predetermined subframe (simultaneous transmission subframe) instructed to carry out PUSCH transmission simultaneously by a plurality of CCs.

For example, the controller 401, while executing control to transmit the first MAC control element on the first carrier in the simultaneous transmission subframe, may control as to whether to transmit the second MAC control element on the second carrier in the simultaneous transmission subframe based on the listening result (the first embodiment).

Moreover, the controller 401 may control whether to transmit the first MAC control element by the first carrier or the second MAC control element by the second carrier in the simultaneous transmission subframe based on the listening result (the second embodiment).

Moreover, the controller 401 may control whether to transmit the first MAC control element by the first carrier or the second MAC control element by the first carrier in the simultaneous transmission subframe based on the listening result (the third embodiment).

When the listening result indicates LBT_{idle} (idle state), the controller 401 may execute control to transmit the second MAC control element by at least one carrier in the simultaneous transmission subframe.

Note that the controller 401 may include a data buffering unit to accumulate (buffer) the user data (uplink data) input from the application unit 205. The data buffering unit can output a predetermined quantity of data to the transmission signal generator unit 402 from the stored data. The data buffering unit may be formed from a buffer, a buffer circuit or a buffer device which can be described based on the common knowledge in the technical field of the present invention.

Further, the controller 401 can manage the timer used as the reference of the timing for transmitting BSR to the user terminal 20. For example, the controller 401 may manage a periodic BSR timer (periodicBSR-Timer) and retxBSR-Timer and may execute processings such as starting, restarting, stopping and the like of these timers.

Furthermore, the controller 401 controls the uplink transmission power of the user terminal 20. More specifically, the controller 401 controls the transmit power of each CC based on signaling (for example, TPC command) from the radio base station 20. Moreover, the controller 401 computes the PH of each CC based on the maximum transmittable power, PUCCH transmission power, PUSCH transmission power, etc. for each CC. PH thus computed is output to the transmission signal generator unit 402 and is used for creation of PHR.

When the data (PHR setting data) for setting a set of PHR timer and parameter is input from the reception signal processing unit 404, the controller 401 sets the PHR timer and parameter to the measurement unit 405.

Moreover, if data regarding the carrier requiring the listening (UL LBT) is input from the reception signal processing unit 404, the controller 401 may control the listening in the measurement unit 405 based on the data.

Based on the instruction from the controller 401, the transmission signal generator unit 402 generates uplink signals (uplink control signal, uplink data signal, uplink reference signal, etc.) and outputs them to the mapping unit 403. The transmission signal generator unit 402 can be formed from a signal generator, signal generating circuits or signal generating device which can be described based on the common knowledge in the technical field of the present invention.

The transmission signal generator unit 402 generates the delivery acknowledgment signal (HARQ-ACK) and the uplink control signal regarding the channel state information (CSI), for example, based on the instruction from the controller 401. Further, the transmission signal generator unit 402 generates an uplink data signal based on the instruction from the controller 401. For example, when the downlink control signal notified from a radio base station 10 contains the UL Grant, the transmission signal generator unit 402 is instructed by the controller 401 to generate the uplink data signal.

The transmission signal generator unit 402 generates PHR MACCE and/or BSR MAC CE to form MAC PDU and adds it to be contained in a transmission signal, to be output to the mapping unit 403 based on the instruction from the controller 401. Here, the transmission signal generator unit 402 may generate the first MAC control element to include real PH of the first carrier and virtual PH of the second carrier. Further, the transmission signal generator unit 402 may generate the second MAC control element to include real PH of the first carrier and real PH of the second carrier.

Further, the transmission signal generator unit 402 may generate the first MAC control element to include data regarding the buffer size in consideration of the data amount of uplink data transmission of the first carrier. The transmission signal generator unit 402 may generate the second MAC control element to include data regarding the buffer size in consideration of both the data amount of uplink data transmission of the first carrier, and that of uplink data transmission of the second carrier.

The mapping unit 403 maps the uplink signals generated in the transmission signal generator unit 402 in radio resources based on the instruction from the controller 401, and outputs them to the transmitter-receiver unit 203. The mapping unit 403 can be formed from any mapper, mapping circuit or wafer scanner which can be described based on the common knowledge in the technical field of the present invention.

The reception signal processing unit 404 performs reception processings (for example, demapping , demodulation, decoding, etc.) to the reception signals input from the transmitter-receiver unit 203. Here, the reception signals are downlink signals (downlink control signal, downlink data signal, downlink reference signal, etc.) transmitted from the radio base station 10, for example. The reception signal processing unit 404 can be formed form any signal processor, signal processing circuit or signal processing device which can be described based on the common knowledge in the technical field of the present invention. Moreover, the reception signal processing unit 404 can form a receiving unit according to the present invention.

The reception signal processing unit 404 outputs the data decoded by the reception processing to the controller 401. The reception signal processing unit 404 outputs, for example, notification information, system information, RRC signaling, DCI, etc. to the controller 401. Further, the reception signal processing unit 404 outputs the reception signals and signals after the reception processing to the measurement unit 405.

The measurement unit 405 measures the received signals. The measurement unit 405 can be formed from any measuring instrument, measuring circuit or measuring device which can be described based on the common knowledge in the technical field of the present invention.

The measurement unit 405 may carry out LBT on a carrier to which LBT is set (, which is a carrier which carries out the listening before the transmission of a signal, that is, for example, an unlicensed band) based on the instruction from the controller 401. The measurement unit 405 may output a LBT result (for example, a judgment result as to whether the channel state is idol or busy) to the controller 401.

The measurement unit 405 can measure the downlink path loss of each CC. The measurement unit 405 may include, for example, two PHR timers (periodicPHR-Timer and prohibitPHR-Timer) . The measurement unit 405 may be set up with the data regarding the PHR timers and path loss from the controller 401. The measurement unit 405 may notify the controller 401 to trigger a predetermined PHR based on the PHR timers and path loss.

Further, the measurement unit 405 may measure, for example, the received power (for example, RSRP), the received signal strength (RSSI), the receiving quality (for example, RSRQ), the channel state, etc. of a signal received. For example, the measurement unit 405 may carry out RRM measurement on the discovery signal by an unlicensed CC. Measurement results may be output to the controller 401.

### (Hardware configuration)

Note that the block diagram used to explain the above embodiment shows the blocks in units of functions. The functional blocks (structural units) are realized by an arbitrary combination of hardware and software. Further, how to realize each functional block is not particularly limited. That is, each functional block may be realized by one physically coupled device or two more physically separated devices connected by a cable or radio.

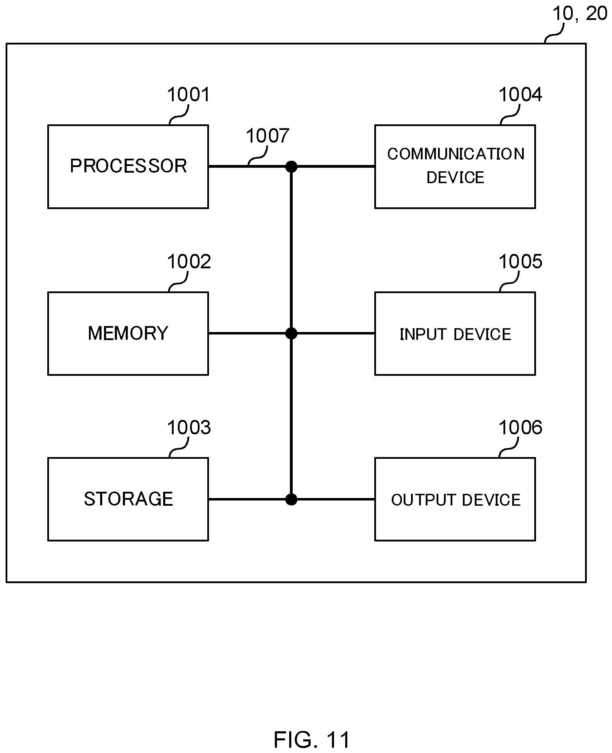

For example, the radio base stations in 1 embodiment of the present invention, a user terminal, etc. may function as a computer which processes the radio communication method of the present invention. FIG. 11 is a diagram showing an example of the hardware configurations of the radio base station and user terminal according to an embodiment of the present invention. The radio base station 10 and the user terminal 20 each may be physically configured as a computer device including a processor 1001, a memory 1002, a storage 1003, a communication device 1004, an input device 1005, an output unit 1006, a bus 1007, etc.

In the following description, the term "device" can be interpreted also as a circuit, an apparatus, a unit or the like. The hardware configurations of the radio base stations 10 and the user terminal 20 may include one or more of the devices shown in the figure, or may not including some of the devices.

Each of the functions of the radio base station 10 and the user terminal 20 can be realized by reading a predetermined software (program) read onto hardware devices such as the processor 1001 and the memory 1002 for the processor 1001 to carry out calculation, and controlling communication by the communication device 1004 and read and/or write of data in the memory 1002 and storage 1003.

The processor 1001 controls the entire computer, for example, by driving the operating system. The processor 1001 may comprise an interface with a peripheral device, and a central processing unit (CPU) including a control unit, an arithmetic unit, a register, etc. For example, the baseband signal processing unit 104 (204), the call processing unit 105, etc., discussed above may be realized by the processor 1001.

The processor 1001 reads a program (program code), a software module and data from the storage 1003 and/or the communication device 1004 to the memory 1002, and executes various kinds of processes according thereto. The program used here is that makes the computer to execute at least part of the operations described in the above-described embodiments. For example, the controller 401 of the user terminal 20 may be realized by a control program stored in a memory 1002 to be operated by the processor 100, and so may be the other functional blocks.

The memory 1002 is a computer-readable recording medium, and may comprise at least one of, for example, Read-Only Memory (ROM), Erasable Programmable ROM (EPROM) and Random Access Memory (RAM). The memory 1002 may be called a register, cache, a main memory (main storage) or the like. The memory 1002 can save a program (program code), a software module, etc. executable to carry out the radio communication method according to the embodiment of the present invention.

The storage 1003 is a computer-readable recording medium, and may comprise at least one of, for example, an optical disc such as Compact Disc ROM (CD-ROM), a hard disk drive, a flexible disk, a magneto-optical disc and a flash memory. The storage 1003 may be called an auxiliary storage device.

The communication device 1004 is the hardware (transmitting/receiving device) for carrying out communications between computers through a cable and/or a wireless network, and may be called, for example, a network device, a network controller, a network card, or a communication module. For example, the transmitting/receiving antennas 101 (201), the amplifier units 102 (202), the transmitter-receiver units 103 (203), the transmission channel interface 106, etc. may be each realized by the communication device 1004.

The input device 1005 is an input device (for example, a keyboard or mouse) which receive entries from outside. The output unit 1006 is an output device (for example, a display or speaker) to output to outside. The input device 1005 and the output unit 1006 may be integrated as one structure (for example, a touch panel).

Moreover, the devices including the processor 1001 and the memory 1002 are connected by a bus 1007 for communicating data. The bus 1007 may comprise a single bus or different buses between the devices.

Further, the radio base station 10 and the user terminal 20 may be configured to include hardware such as a microprocessor, a digital signal processor (DSP), Application Specific Integrated Circuit (ASIC), Programmable Logic Device (PLD) or Field Programmable Gate Array (FPGA), and some or all of the functional blocks may be realized by the hardware. For example, the processor 1001 may be implemented by at least one of the hardware devices.

The terms described in this specification and/or terms required to understand this specification may be replaced with those having the same or similar meaning. For example, a channel and/or a symbol may be signals (signaling). Further, a signal may be a message. Furthermore, a component carrier (CC) may be called a cell, frequency carrier, carrier frequency, or the like.

Moreover, the radio frame may comprise one or a plurality of periods (frames) in a time domain. The one or more periods (frames) which form a radio frame may be called a subframe. Further, a subframe may comprise one a plurality of slots in a time domain. Furthermore, a slot may comprise one a plurality of symbols (OFDM symbol, SC-FDMA symbol, etc.) in a time domain.

Each of the radio frame, subframe, slot and symbol represents a time unit for transmitting a signal. The radio frame, subframe, slot and symbol may be each called by some other corresponding name. For example, one subframe may be called Transmission Time Interval (TTI), or a plurality of continuous subframes may be called TTI, or one slot may be called TTI. That is, a subframe and TTI may be a subframe (1 ms) in the existing LTE, may be a period shorter than 1 ms (for example, 1 to 13 symbols), or may be a period longer than 1 ms.

Here, TTI refers to, for example, a minimum time unit of scheduling in radio communications. For example, in the LTE system, a radio base station carries out scheduling which assigns radio resources (the frequency band which can be used in each user terminal, transmission power, etc.) in unit of TTI to each user terminal. Note that the definition of TTI is not limited to this.

TTI which has a time length for 1 ms may usually be called TTI (TTI in LTE Rel.8-12), normal TTI, long TTI, ordinary subframe, normal subframe, or long subframe. TTI shorter than the ordinary TTI may be called a shortened TTI, short TTI, shortened subframe or short subframe.

A resource block (RB) is a resource assignment unit of a time domain and a frequency domain, and may also contain one or a plurality of continuous sub-subcarrier waves (subcarriers) in the frequency domain. Moreover, RB may contain, in the time domain, one or a plurality of symbols and may be a length of one slot, one subframe or one TTI. One TTI and one subframe may each comprise one or a plurality of resource blocks. Note that RB may be called a physical resource block (PRB), PRB pair, RB pair or the like.

Moreover, a resource block may comprise one or a plurality of resource elements (REs). For example, one RE may be a radio-resource region of one subcarrier and one symbol.

The configurations of the radio frame, subframe, slot and symbol described above are only examples. For example, the configurations such as the number of subframes contained in a radio frame, the number of slots contained in a subframe, the number of symbols or RBs contained in a slot, the number of subcarriers contained in an RB and the number of symbols in TTI, the symbol length, Cyclic Prefix (CP) length may be varied in various ways.

The data, parameters, etc., described in this specification may be expressed by absolute values, or relative values from respective predetermined values, or some other corresponding data. For example, the radio resources may be designated by respective predetermined indexes.

The data, signals, etc., described in this specification may be expressed using any one various different technologies. For example, the data, commands, instructions, information, signals, bits, symbols, chips may be expressed by voltage, current, electromagnetic wave, magnetic field or a magnetic particle, optical field, photon, or a combination of any of these.

The software, commands, data, etc., may be transmitted and received through a transmission medium. For example, in the case where software is transmitted from a website, server, or other remote source using a wired technology (a coaxial cable, an optical fiber cable, a twisted pair, a digital subscriber line (DSL) or the like) and/or a radio technology (infrared ray, microwave, or the like), such wired technology and/or radio technology are included in the definition of the transmission media.

Moreover, the radio base station in this specification may be replaced by the user terminal when read. For example, each of the embodiments/examples of the present invention may be apply to the structure in which communication between a radio base station and a user terminal is replaced by communication between a plurality of user terminals (Device-to-Device: D2D) . In this case, the user terminal 20 may be configured to have the functions of the above-described radio base station 10. Further, such a term as "up" or "down" may be replaced by "side" . For example, an uplink channel may be read as a side channel.

Similarly, the user terminal in this specification may be replaced by the radio base station. In this case, the radio base station 10 may be configured to have the functions of the user terminal 20.

The embodiments/examples described in this specification may be carried out solely or in combination, or may be switched when carried out. Moreover, a notification of predetermined data (for example, notification of "being X") may not be limited to an explicit type, but may be implicit (for example, implicating by not notifying the predetermined data).

The notification of data may not be limited to the ways described in the embodiments/examples provided in this specification, but may be carried out by other methods. For example, the notification of data may be carried out by physical layer signaling (for example, Downlink Control Information (DCI), Uplink Control Information (UCI), upper layer signaling (for example, Radio Resource Control (RRC) signaling, notification data (Master Information Block (MIB)), System Information Block (SIB)), Medium Access Control (MAC) signaling or other signals or a combination of any of these. The RRC signaling may be called an RRC message, or specifically, for example, an RRC connection setup message, an RRC connection reconfiguration message. The MAC signaling may be notified by a MAC control elements (MAC CE), for example.

Each of the embodiments/examples described in this specification may be applied to systems which adopt Long Term Evolution (LTE), LTE-Advanced (LTE-A), LTE-Beyond (LTE-B), SUPER 3G, IMT-Advanced, 4-th generation mobile communication system (4G), 5-th generation mobile communication system (5G), Future Radio Access (FRA), New Radio Access Technology (New-RAT), Global System for Mobile communications (GSM (registered trademark)), CDMA2000, Ultra Mobile Broadband (UMB), IEEE-802.11 (Wi-Fi (registered trademark)), IEEE-802.16 (WiMAX (registered trademark)), IEEE-802.20, Ultra-WideBand (UWB), Bluetooth (registered trademark), or other appropriate radio communication methods, and/or the next-generation system expanded based on these.

The order of the procedures, sequences, flow charts, etc. in each of the embodiments/examples described in this specification may be switched as long as no inconsistency arises. For example, as to the methods described in this specification, the elements of various steps are presented in an exemplified order and not limited to the specific order presented here.

In the above, the present invention is described in detail, but it is clear for a person skilled in the art that the present invention is not limited to the embodiments described in this specification. For example, the embodiments described above may be used solely or in combination. The present invention can be carried out with revisions and modifications without departing from the spirit of the invention defined by the claims . The descriptions are intended to cover only examples of the invention and are not meant to restrict the scope and spirit of the invention.

This application is based on JP 2016-020302 filed on February 4, 2016, the entire contents of which are incorporated herein by reference.

## Claims

1. A user terminal carrying out communication using a first carrier for which listening is unnecessary before uplink transmission and a second carrier for which listening is necessary before uplink transmission, the user terminal comprising:
a receiving section that receives one or more downlink control data for scheduling uplink data transmission on the first carrier in a predetermined subframe and uplink data transmission on the second carrier in the predetermined subframe;
a measurement section that carries out the listening by the second carrier before the uplink data transmission on the second carrier in the predetermined subframe, to acquire a listening result;
a generation section that generates a first Medium Access Control (MAC) element and a second MAC element; and
a control section that executes control to transmit the first MAC element or the second MAC element on at least one of the first carrier and the second carrier in the predetermined subframe based on the listening result.

2. The user terminal according to claim 1, wherein
the control section carries out control to transmit the first MAC element on the first carrier in the predetermined subframe, and carries out control as to whether to transmit the second MAC element on the second carrier in the predetermined subframe based on the listening result.

3. The user terminal according to claim 1, wherein
the control section carries out control as to whether to transmit the first MAC element on the first carrier or the second MAC element on the second carrier in the predetermined subframe based on the listening result.

4. The user terminal according to claim 1, wherein
the control section carries out control as to whether to transmit the first MAC element on the first carrier or the second MAC element on the first carrier in the predetermined subframe based on the listening result.

5. The user terminal according to any one of claims 2 to 4, wherein
the control section carries out control to transmit the second MAC element in the predetermined subframe when the listening result is LBT_{idle}.

6. The user terminal according to any one claims 1 to 5, wherein
the generation section generates the first MAC element to include real Power Headroom (PH) of the first carrier and virtual PH of the second carrier, and the second MAC element to include real PH of the first carrier and real PH of the second carrier.

7. The user terminal according to any one of claims 1 to 6, wherein
the generation section generates the first MAC element to include data regarding a buffer size estimated from a data amount of the uplink data transmission on the first carrier, and the second MAC element to include data regarding a buffer size estimated from a data amount of both the uplink data transmission on the first carrier and the uplink data transmission on the second carrier.

8. A radio base station which communicates with a user terminal using a first carrier for which listening is unnecessary before uplink transmission and a second carrier for which listening is necessary before uplink transmission, the base station comprising:
a transmission section that transmits one or more downlink control data for scheduling uplink data transmission on the first carrier in a predetermined subframe and uplink data transmission on the second carrier in the predetermined subframe; and
a receiving section that receives a Medium Access Control (MAC) element in the predetermined subframe,
the MAC control element being selected from a first MAC element and a second MAC element to be transmitted on at least one of the first carrier and the second carrier based on a result of listening carried out by the second carrier before the uplink data transmission on the second carrier in the predetermined subframe in the user terminal.

9. A radio communication method for a user terminal which carries out communication using a first carrier for which listening is unnecessary before uplink transmission and a second carrier for which listening is necessary before uplink transmission, the method comprising:
receiving one or more downlink control data for scheduling uplink data transmission on the first carrier in a predetermined subframe and uplink data transmission on the second carrier in the predetermined subframe;
acquiring a listening result by carrying out listening by the second carrier before the uplink data transmission on the second carrier in the predetermined subframe;
generating a first Medium Access Control (MAC) element and a second MAC element; and
controlling to transmit the first MAC element or the second MAC element on at least one of the first carrier and the second carrier in the predetermined subframe based on the listening result.
